# EUROPEAN PATENT APPLICATION

(11) **EP 1 182 898 A1**
(43) Date of publication of application: **27.02.2002**
(21) Application number: 01914197.7
(22) Date of filing: 23.03.2001
(51) Int. Cl.: H04Q 7/36, H04J 11/00, H04J 13/00

(54) **COMMUNICATION TERMINAL AND RADIO COMMUNICATION METHOD**

(30) Priority: 29.03.2000 JP 2000092364
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0102312
(87) International publication number: WO0174104

(57) **Abstract**

Spectral efficiency is improved by assigning only a small number of subcarriers to an access channel as compared with a traffic channel to which a large number of subcarriers are assigned. Also, by grouping users and assigning the access channel of each group to an individual subcarrier, the reception band is reduced and processing involved in reception decreased, and power consumption is reduced, thus saving battery power.

## Description

### Technical Field

The present invention relates to a communication terminal apparatus and radio communication apparatus to be used in a digital radio communication system.

### Background Art

In a cellular mobile radio communication system, radio communication channels within the service area of a base station include traffic channels that accommodate traffic data, control channels for carrying out control, and so forth.

With regard to call origination from a radio communication mobile station, and an access channel that transmits control information, etc., from a mobile station to a base station, mobile stations are grouped, and are handled as individual groups with different subcarriers assigned, thereby avoiding transmission collisions on an access channel and a decline in spectral efficiency can be suppressed.

On the one hand, with the increase in information for which transmission of voice, images, etc., is performed, such as multimedia information, user traffic channels are becoming increasingly high-speed, large-volume, and wideband. A technology for dynamically varying the number of subcarriers assigned to a user traffic channel in a multicarrier communication method has been disclosed as a method of accommodating a large-volume user traffic channel efficiently in Unexamined Japanese Patent Publication No. 11-17644.

On the other hand, an access channel which is a control channel used in an uplink from a mobile station to a base station is used to perform short message communication to a base station, and so forth.

If the band of a traffic channel that accommodates large-volume traffic data and performs communication is similarly assigned to an access channel also, there is a problem in that, since the amount of information transmitted by an access channel is small, wasteful communication channel use will occur, leading to a decline in spectral efficiency.

The above description refers to multicarrier communications, but the same kind of problem also arises with multicode communications. That is to say, if a spreading code equal to that of a large-volume traffic channel is assigned to an access channel used for control or short message communication, it will not be possible to use code resources efficiently.

### Disclosure of Invention

It is an object of the present invention to provide a communication terminal apparatus and radio communication method whereby spectral efficiency is not lowered, or code resources are used efficiently, and moreover it is possible to prevent an increase in power consumption by transmission circuitry in a communication terminal apparatus.

This object is achieved, in a multicarrier communication system, by assigning a small number of subcarriers to an uplink control channel such as an access channel compared with a large-volume traffic channel for which a plurality of subcarriers are assigned to a user.

Also, this object is achieved, in a multicarrier communication system, by grouping users and assigning an uplink control channel subcarrier to each of these groups, whereby the necessity of transmission of a plurality of subcarriers by a communication terminal apparatus is eliminated, processing involved in reception is reduced, and power consumption is reduced, thus saving battery power.

Furthermore, this object is achieved, in a multicode communication system, by assigning a small number of spreading codes to an uplink control channel such as an access channel compared with a large-volume traffic channel for which a plurality of spreading codes are assigned to a user, thereby making efficient use of code resources.

Moreover, this object is achieved, in a multicode communication system, by grouping users and assigning an uplink control channel spreading code to each of these groups, whereby the necessity of processing with a plurality of spreading codes by a communication terminal apparatus is eliminated, processing is reduced, and power consumption is reduced, thus saving battery power.

### Brief Description of Drawings

FIG.1 is a block diagram showing the configuration of a communication terminal apparatus according to Embodiment 1 of the present invention;
FIG.2 is a block diagram showing the configuration of a base station apparatus according to the above-mentioned embodiment;
FIG.3 is a drawing showing the subcarrier assignment configuration according to the above-mentioned embodiment;
FIG.4 is a block diagram showing the configuration of a communication terminal apparatus according to Embodiment 2 of the present invention;
FIG.5 is a block diagram showing the configuration of a base station apparatus according to the above-mentioned embodiment;
FIG. 6 is a drawing showing the subcarrier assignment configuration according to the above-mentioned embodiment;
FIG.7 is a block diagram showing the configuration of a communication terminal apparatus according to Embodiment 3 of the present invention; and
FIG.8 is a block diagram showing the configuration of a base station apparatus according to the above-mentioned embodiment.

### Best Mode for Carrying out the Invention

With reference now to the accompanying drawings, embodiments of the present invention will be explained in detail below.

### (Embodiment 1)

In this embodiment, a case is described in which, in a multicarrier communication system using the OFDM (Orthogonal Frequency Division Multiplex) method, an access channel is assigned as a control channel to a smaller number of subcarriers than the number of traffic channel subcarriers, and access is performed to grouped communication terminal apparatuses.

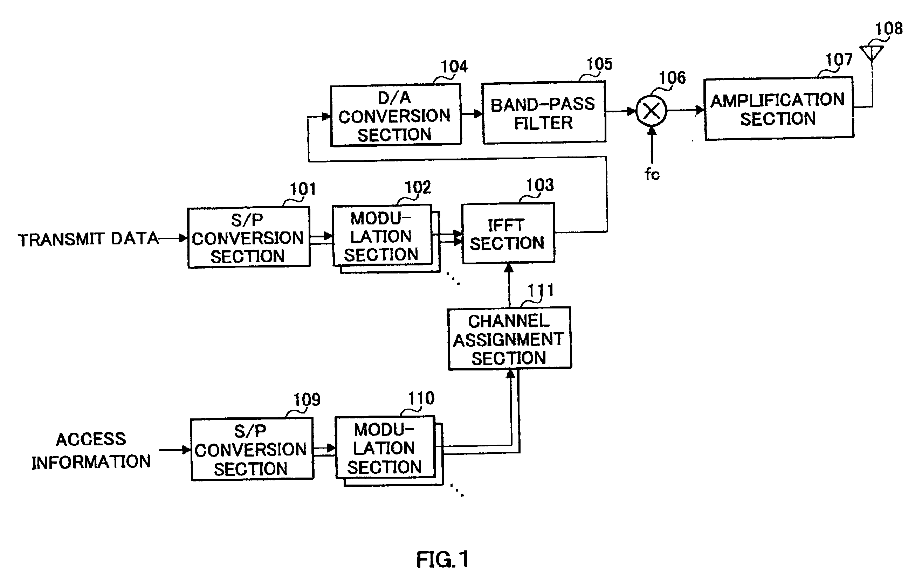

FIG.1 is a block diagram showing the configuration of a communication terminal apparatus according to Embodiment 1 of the present invention. In the communication terminal apparatus shown in FIG. 1, transmit data is converted to parallel signals by a serial/parallel (S/P) conversion section 101, and the parallel signals are output to modulation sections 102. Each modulation section 102 performs digital modulation processing on the input signal, and outputs the modulated signal to an IFFT (inverse fast Fourier transform) section 103.

On the other hand, access information is converted to parallel signals by an S/P conversion section 109, and the parallel signals are output to modulation sections 110. Each modulation section 110 performs digital modulation processing on the input signal, and outputs the modulated signal to an access channel information assignment section 111. The access channel assignment section 111 performs control to assign access information to a smaller number of subchannels than the number of subchannels to which transmit data is assigned.

The IFFT section 103 performs IFFT processing on transmit data and access information that has undergone digital modulation, in accordance with assignment information from the access channel information assignment section 111, and outputs the signal resulting from this IFFT processing to a D/A conversion section 104. The D/A conversion section 104 converts the IFFT-processed signal to an analog signal and outputs it to a band-pass filter 105. The band-pass filter 105 filters the signal band from the analog signal.

A signal in this signal band is multiplied by a carrier center frequency (fc) in a multiplier 106. This carrier is amplified by an amplification section 107. The amplified signal is transmitted to a base station apparatus via an antenna 108.

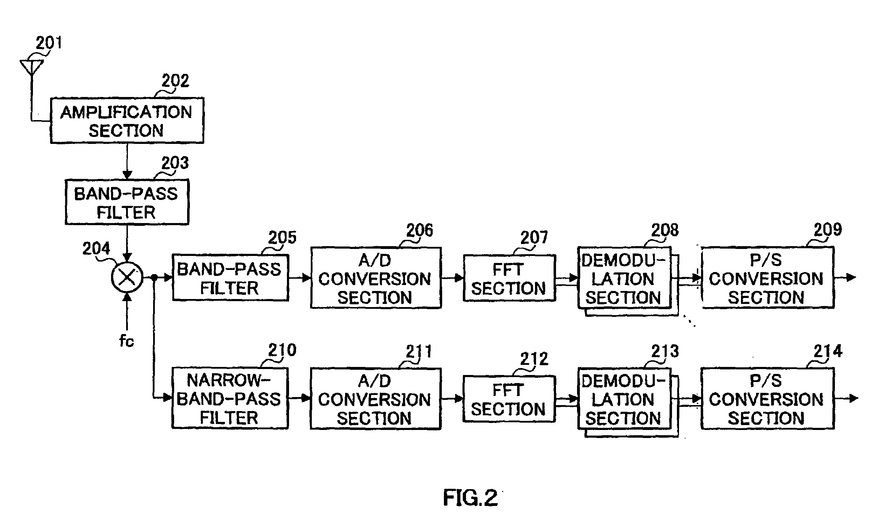

FIG.2 is a block diagram showing the configuration of a base station apparatus that performs radio communication with a communication terminal apparatus according to this embodiment. In the base station apparatus shown in FIG.2, a signal transmitted from a communication terminal apparatus is received via an antenna 201 and amplified by an amplification section 202, after which the signal band is filtered by a band-pass filter 203.

The signal in which only the signal band has been extracted is multiplied by a carrier center frequency (fc) in a multiplier 204, and band-converted. The band-converted signal is separated into a traffic channel and an access channel.

As regards a traffic channel signal, a traffic channel band is filtered by a traffic channel (comparatively wideband) band-pass filter 205, and undergoes A/D conversion by a high-speed A/D conversion section 206. The digital signal undergoes FFT processing by a traffic channel wideband FFT section 207, and each signal corresponding to a subcarrier is output to a demodulation section 208. The subcarrier signals are demodulated by the respective demodulation sections 208, and output to a parallel/serial (P/S) conversion section 209. The demodulated data is converted to a serial signal by the P/S conversion section 209, and output as time series data.

Similarly, as regards an access channel signal, the access channel band is filtered by an access channel narrow-band-pass filter 210, and undergoes A/D conversion by a high-speed A/D conversion section 211. The digital signal undergoes FFT processing by an access channel narrow-band FFT section 212, and each signal corresponding to a subcarrier is output to a demodulation section 213. The subcarrier signals are demodulated by the respective demodulation sections 213, and output to a parallel/serial (P/S) conversion section 214. The demodulated data is converted to a serial signal by the P/S conversion section 214, and output as time series data.

The case will now be described where an access channel and a traffic channel that has been made wideband are transmitted and received by a base station apparatus and communication terminal apparatus which are multicarrier communication apparatuses that have the above-described configurations.

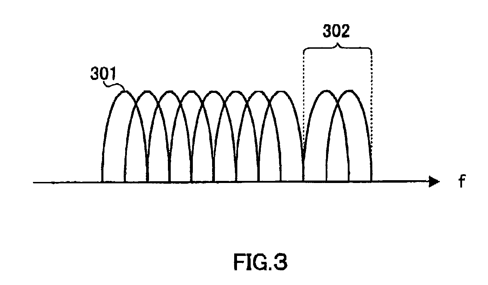

In the communication terminal apparatus shown in FIG.3, a traffic channel transmit data digitally-modulated signal and access channel access information digitally-modulated signal undergo IFFT processing, and are transmitted to a base station apparatus as a multicarrier signal.

In this case, since the volume of transmit data transmitted is large, a traffic channel is made wideband, but since an access channel is used for control or short message communication and the volume of access information transmitted is small, it is not necessary for an access channel to be made wideband. Therefore, in this embodiment, the access channel assignment section 111 on the communication terminal apparatus side assigns grouped access channel subcarriers. That is to say, an access channel is assigned to subcarriers as shown in FIG.3.

An example of a method of grouping a plurality of communication terminal apparatuses is to estimate the direction of arrival of signals from each communication terminal apparatus, and group those for which the direction of arrival is within a predetermined angular range.

FIG.3 is a drawing showing the configuration of traffic channel and access channel assignment to subcarriers. In FIG.3, reference numeral 301 denotes one subcarrier, and reference numeral 302 denotes access channel subcarriers assigned to a group to which communication terminal apparatuses belong. Here, a communication terminal apparatus group corresponds to a subcarrier group (in FIG.3, two subcarriers). Assignment information on subcarriers assigned in this way ( information as to which communication terminal group is assigned to which subcarriers) is reported to each communication terminal apparatus.

The base station apparatus separates traffic channel signals and access channel signals, and for access channel signals, receives, and identifies access information in, only the subcarrier group corresponding to the group to which the communication terminal apparatus that is the communicating party belongs. In this case, the frequencies of the subcarriers corresponding to the group to which a communication terminal apparatus belongs are reported by the base station apparatus, and therefore it is possible for each communication terminal apparatus to transmit only the subcarrier group corresponding to the group to which that communication terminal apparatus itself belongs in sending access information.

Thus, according to a multicarrier communication apparatus of this embodiment, even when a user's traffic channel is assigned a plurality of subcarriers that provides a wideband, a small number of subcarriers are assigned to an access channel including an uplink control channel. Consequently, even when a traffic channel is large-volume, control information such as access information does not increase, and it is possible to prevent a control channel that transmits control information from becoming large-volume.

Therefore, in a multicarrier communication method, transmission is performed using a plurality of subcarriers for a large-volume traffic channel, and transmission is performed with fewer subcarriers assigned for an access channel than for a traffic channel. Consequently, in access channel transmission, it is possible not to perform demodulation using FFT processing across a wide band, but to use FFT processing only in a narrow band in which an access channel is present.

As a result, a slow sampling rate can be used for an access channel, and the amount of signal processing and power consumption can be reduced. By this means, it is possible to transmit an access channel at low speed and in a narrow band, and to reduce communication terminal transmission processing, and so save battery power. Also, since a plurality of subcarriers spanning a wide band are not occupied by an access channel alone, spectral efficiency can also be improved.

Moreover, it may be possible for a multicarrier communication apparatus according to this embodiment to carry out transmission processing for a traffic channel and access channel by means of the same processing system, with, for example, traffic channel and access channel transmission processing performed by means of time division, and the processing band of a band-pass filter being changed as appropriate according to the channel.

Furthermore, it may be possible for a multicarrier communication apparatus according to this embodiment to use the same subcarrier group for a traffic channel and access channel, and change the number of subcarriers to be used (using fewer for an access channel than for a traffic channel).

### (Embodiment 2)

In this embodiment, a case is described in which, in a multicarrier communication system using the OFDM method, an access channel is assigned to a specific subcarrier as a control channel, and access is performed to grouped communication terminal apparatuses.

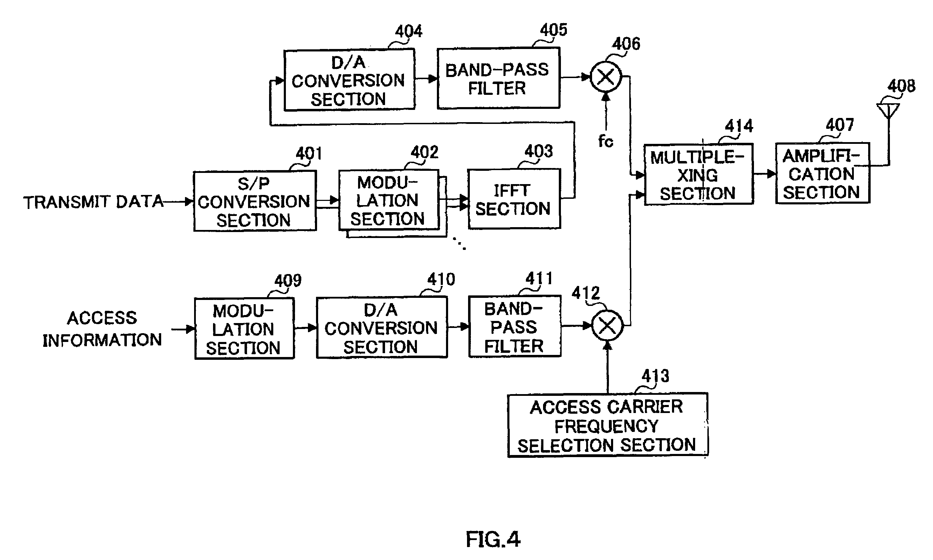

FIG.4 is a block diagram showing the configuration of a communication terminal apparatus according to Embodiment 2 of the present invention. In the communication terminal apparatus shown in FIG. 4, transmit data is converted to parallel signals by an S/P conversion section 401, and the parallel signals are output to modulation sections 402. Each modulation section 402 performs digital modulation processing on the input signal, and outputs the modulated signal to an IFFT section 403.

The IFFT section 403 performs IFFT processing on transmit data that has undergone digital modulation, and outputs the signal resulting from this IFFT processing to a D/A conversion section 404. The D/A conversion section 404 converts the IFFT-processed signal to an analog signal and outputs it to a band-pass filter 405. The band-pass filter 405 filters the signal band from the analog signal. A signal in this signal band is multiplied by a carrier center frequency (fc) in a multiplier 406.

On the other hand, access information undergoes digital modulation processing by a modulation section 409, and a modulated signal is output to a D/A conversion section 410. The D/A conversion section 410 converts the digitally modulated signal to an analog signal, and outputs it to a band-pass filter 411. The band-pass filter 411 filters the signal band from the analog signal. A signal in this signal band is multiplied by an access carrier frequency in a multiplier 412. This access carrier frequency is selected by an access carrier frequency selection section 413. There are no particular restrictions on the method of selecting the access carrier frequency.

Transmit data and access information multiplied by the carrier frequencies are multiplexed by an adder 414, and these multiplex signals are amplified by an amplification section 407. The amplified signals are transmitted to base station apparatuses via an antenna 408.

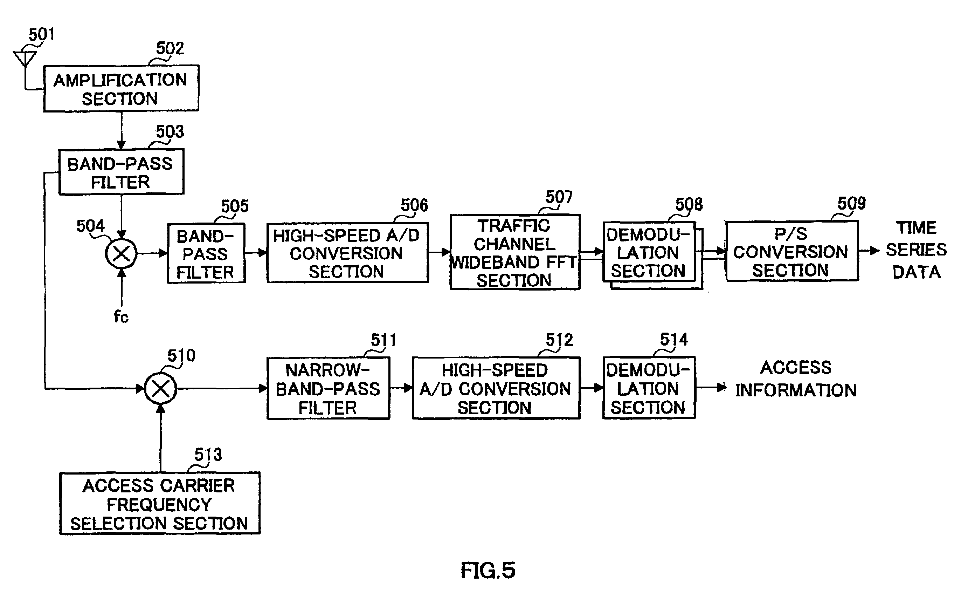

FIG.5 is a block diagram showing the configuration of a base station apparatus that performs radio communication with a communication terminal according to this embodiment. In the base station apparatus shown in FIG.5, a signal transmitted from a communication terminal apparatus is received via an antenna 501 and amplified by an amplification section 502, after which the signal band is filtered by a band-pass filter 503.

The signal in which only the signal band has been extracted is multiplied by a carrier center frequency (fc) in a multiplier 504, and band-converted. Also, the signal in which only the signal band has been extracted is multiplied by an access carrier frequency in a multiplier 510, and band-converted. This access carrier frequency is selected by an access carrier frequency selection section 513. In this way, received signals are separated into a traffic channel and access channel.

As regards a traffic channel signal, the traffic channel band is filtered by a traffic channel band-pass filter 505, and undergoes A/D conversion by a high-speed A/D conversion section 506. The digital signal undergoes FFT processing by a traffic channel wideband FFT section 507, and each signal corresponding to a subcarrier is output to a demodulation section 508. The subcarrier signals are demodulated by the respective demodulation sections 508, and output to a P/S conversion section 509. The demodulated data is converted to a serial signal by the P/S conversion section 509, and output as time series data.

Similarly, as regards an access channel signal, the access channel band is filtered by an access channel narrow-band-pass filter 511, and undergoes A/D conversion by a high-speed A/D conversion section 512. The digital signal is demodulated by a demodulation section 514, and output as access information.

The case will now be described where an access channel and a traffic channel that has been made wideband are transmitted and received by a base station apparatus and communication terminal apparatus which are multicarrier communication apparatuses that have the above-described configurations.

In the communication terminal apparatus shown in FIG.4, a traffic channel transmit data digitally-modulated signal undergoes IFFT processing, an access channel access information digitally-modulated signal is assigned to a single subcarrier, and these are transmitted to base station apparatuses as a multicarrier signal.

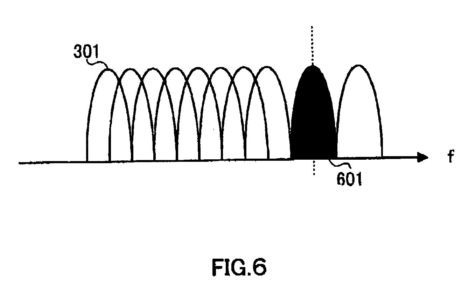

In this case, since the volume of transmit data transmitted is large, a traffic channel is made wideband, but since an access channel is used for control or short message communication, the volume of access information transmitted is small, it is not necessary for an access channel to be made wideband. Therefore, in this embodiment, the access carrier frequency selection section 513 on the communication terminal apparatus side groups a plurality of base station apparatuses which are objects of access, and selects an access channel subcarrier for each group. That is to say, access channel subcarrier selection is carried out as shown in FIG.6.

An example of a method of grouping a plurality of communication terminal apparatuses is to estimate the direction of arrival of signals from each communication terminal apparatus, and group those for which the direction of arrival is within a predetermined angular range.

FIG.6 is a drawing showing the configuration of traffic channel and access channel subcarrier assignment. In FIG.6, reference numeral 301 denotes one subcarrier, and reference numeral 601 denotes an access channel subcarrier assigned to a group to which communication terminal apparatuses belong. Here, a communication terminal apparatus group corresponds to a subcarrier or subcarriers (in FIG.6, one subcarrier). Selection information on a subcarrier selected in this way (information as to which subcarrier has been selected for which communication terminal group) is reported to each communication terminal apparatus.

A communication terminal apparatus separates traffic channel signals and access channel signals, and for access channel signals, transmits only the subcarrier corresponding to the group to which that communication terminal apparatus itself belongs. In this case, the frequency of a subcarrier corresponding to the group to which a communication terminal apparatus itself belongs is reported by the base station apparatus, and therefore it is possible for each communication terminal apparatus to transmit only the subcarrier corresponding to the group to which that communication terminal apparatus itself belongs in sending access information. In this case, the communication terminal apparatus can generate the subcarrier signal component by multiplying a transmit signal by the access carrier (subcarrier) frequency to find a correlation.

Thus, according to a multicarrier communication apparatus of this embodiment, even when a user's traffic channel is assigned a plurality of subcarriers that provides a wideband, a small number of subcarriers (here, one subcarrier) is selected for an access channel including an uplink control channel. Consequently, even when a traffic channel is large-volume, with multicarrier communication apparatuses control information such as access information does not increase and it is possible to prevent a control channel that transmits control information from becoming large-volume.

Therefore, in a multicarrier communication method, a multicarrier communication apparatus of this embodiment transmits on a large-volume traffic channel using a plurality of subcarriers, while selecting fewer subcarriers for an access channel than for a traffic channel, and performs transmission with both multiplexed. Consequently, a multicarrier communication apparatus can generate an access channel by multiplication by the access channel subcarrier frequency. As a result, with a multicarrier communication apparatus, FFT processing need not be performed for an access channel, and the amount of signal processing can be reduced.

Also, a multicarrier communication apparatus of this embodiment can transmit an access channel at low speed and in a narrow band, and can save battery power by reducing communication terminal transmission processing. Moreover, with a multicarrier communication apparatus of this embodiment, since a plurality of subcarriers spanning a wide band are not occupied by an access channel alone, spectral efficiency can be improved.

Also, by grouping users and selecting a subcarrier for the access signal of each group-that is, by assigning the access signal of each group to a subcarrier-a communication terminal does not have to transmit all access channels constantly, but can transmit the access channel assigned to the group to which that communication terminal itself belongs. In this case, it is sufficient for a communication terminal to transmit only a subcarrier to which that communication terminal itself belongs, and modulate the access signal. As a result, it is possible to save battery power through efficient transmission.

For an access channel, a downlink channel for other use may be assigned to a subcarrier by time division rather than using dedicated assignment to a subcarrier. Also, a plurality of subcarriers may be used for an access channel rather than using only a single subcarrier.

### (Embodiment 3)

In this embodiment, a case is described in which, in a multicode communication system using the CDMA (Code Division Multiple Access) method, a smaller number of spreading codes than the number of traffic channel spreading codes are assigned to an access channel as a control channel, and access is performed to grouped communication terminal apparatuses.

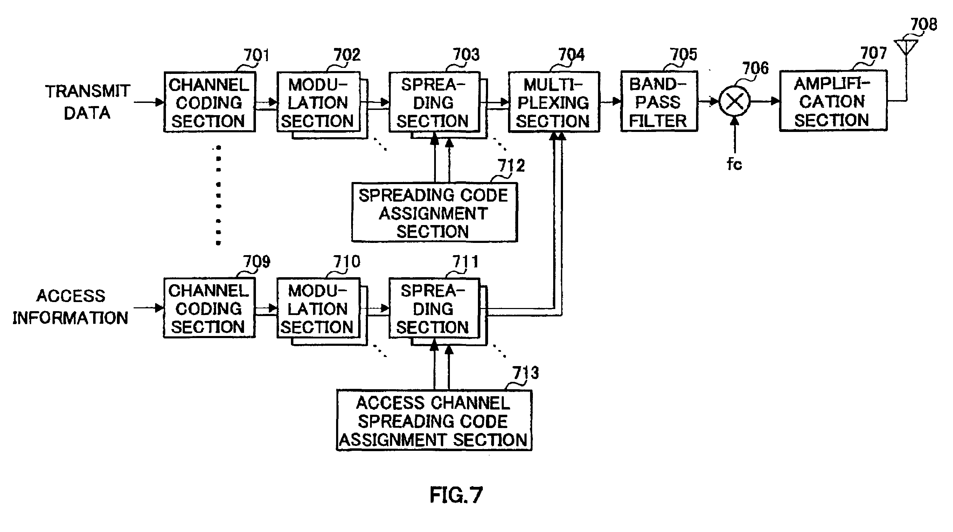

FIG.7 is a block diagram showing the configuration of a communication terminal apparatus according to Embodiment 3 of the present invention. In the communication terminal apparatus shown in FIG.7, transmit data undergoes channel coding (error correction coding, interleaving, and assignment to despreading codes) for the respective channels by a channel coding section 701, and signals that have undergone channel coding are output to modulation sections 702. Each modulation section 702 performs digital modulation processing on the input signal, and outputs the modulated signal to a spreading section 703.

The spreading sections 703 perform spreading modulation processing on signals that have undergone modulation processing, using a spreading code assigned by a spreading code assignment section 712. A spreading code assigned by the spreading code assignment section 712 is output from the spreading code assignment section 712 to the spreading section 703 that processes the signal to which that spreading code has been assigned.

On the other hand, access information undergoes channel coding (error correction coding, interleaving, and assignment to spreading codes) by a channel coding section 709, and signals that have undergone channel coding are output to modulation sections 710. Each modulation section 710 perform digital modulation processing on the input signal, and output the modulated signal to a spreading section 711. Signals that have undergone spreading modulation processing are output to a multiplexing section 704.

The spreading section 711 performs spreading modulation processing on a signal that has undergone modulation processing, using a spreading code assigned by an access channel spreading code assignment section 713. A spreading code assigned by the access channel spreading code assignment section 713 is output from the access channel spreading code assignment section 713 to the spreading section 711 that processes the signal to which that spreading code has been assigned. The access channel spreading code assignment section 713 performs control for assigning a smaller number of spreading codes to access information than the number of spreading codes assigned to transmit data. Signals that have undergone spreading modulation processing are output to the multiplexing section 704.

The multiplexing section 704 multiplexes signals that have undergone spreading modulation processing from spreading sections 703 (transmit data) and signals that have undergone spreading modulation processing from spreading section 711 (access information), and outputs the resulting signal to a band-pass filter 705. The band-pass filter 705 filters the signal band from the multiplexed signal.

A signal in this signal band is multiplied by a carrier center frequency (fc) in a multiplier 706, and this carrier is amplified by an amplification section 707. The amplified signal is transmitted to communication terminal apparatuses via an antenna 708.

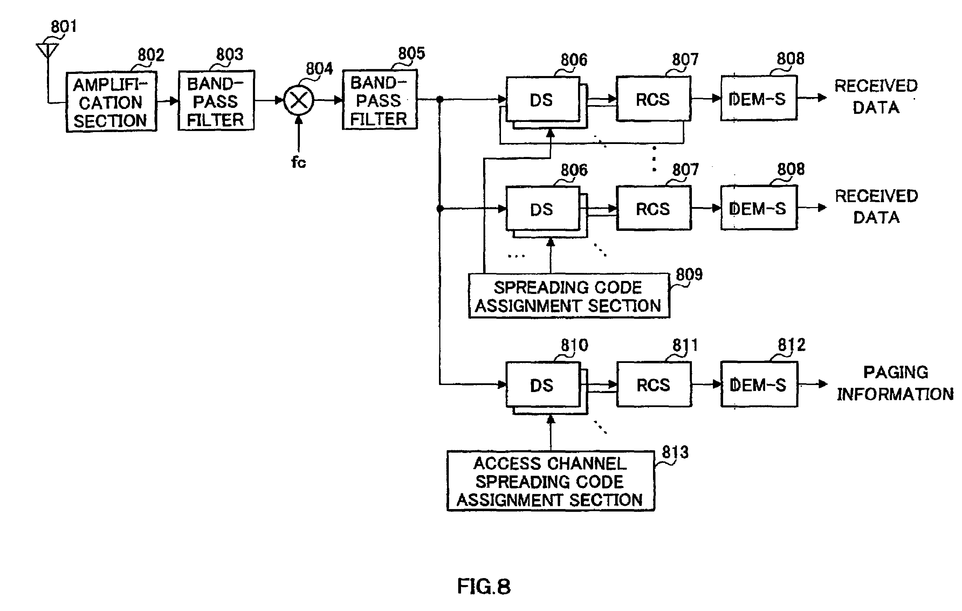

FIG.8 is a block diagram showing the configuration of a base station apparatus that performs radio communication with a communication terminal apparatus according to this embodiment. In the base station apparatus shown in FIG.8, a signal transmitted from a communication terminal apparatus is received via an antenna 801 and amplified by an amplification section 802, after which the signal band is filtered by a band-pass filter 803.

The signal in which only the signal band has been extracted is multiplied by a carrier center frequency (fc) in a multiplier 804, and band-converted. The band-converted signal is sent to traffic channel despreading sections (DS) 806 and an access channel despreading section (DS) 810.

As regards a traffic channel signal, separation is performed by traffic channel despreading sections (DS) 806 by performing despreading processing using a traffic channel spreading code assigned by the base station apparatus. Traffic channel spreading codes are output from a spreading code assignment section 809 to despreading sections (DS) 806.

Signals that have undergone despreading processing are sent to a RAKE combining section (RCS) 807 where they undergo RAKE combining, and a RAKE-combined signal is output to a demodulation section (DEM-S) 808. The RAKE-combined signal is demodulated by the demodulation section (DEM-S) 808 and output as received data.

Similarly, as regards an access channel signal, separation is performed by access channel despreading sections (DS) 810 by performing despreading processing using an access channel spreading code assigned by the base station apparatus. Access channel spreading codes are output from the access channel spreading code assignment section 813 to despreading sections (DS) 810.

Signals that have undergone despreading processing are sent to a RAKE combining section 811 where they undergo RAKE combining, and a RAKE-combined signal is output to a demodulation section (DEM-S) 812. The RAKE-combined signal is demodulated by the demodulation section (DEM-S) 812 and output as received data.

The case will now be described where an access channel and a traffic channel that has been made wideband are transmitted and received by a base station apparatus and communication terminal apparatus which are multicode communication apparatuses that have the above-described configurations.

The communication terminal apparatus shown in FIG. 7 receives a multicode signal in which traffic channel transmit data spread signals and access channel access information spread signals are multiplexed.

In this case, since the volume of transmit data transmitted is large, a plurality of spreading codes are used for a traffic channel, but since an access channel is used for control or short message communication, and the volume of access information transmitted is small, a small number of spreading codes are used for an access channel. Therefore, in this embodiment, on the base station side, a plurality of communication terminal apparatuses which are objects of access are grouped, and a spreading code is assigned to the access channel for each group.

An example of a method of grouping a plurality of communication terminal apparatuses is to estimate the direction of arrival of signals from each communication terminal apparatus, and group those for which the direction of arrival is within a predetermined angular range.

Assignment information on spreading codes assigned in this way (information as to which spreading code is assigned to which communication terminal group) is reported to each communication terminal apparatus.

The base station apparatus separates traffic channel signals and access channel signals by means of despreading processing, and for access channel signals, performs despreading processing with only the spreading code corresponding to the group to which the communication terminal apparatus that is the communicating party belongs, to identify access information. In this case, the spreading code corresponding to the group to which a communication terminal apparatus itself belongs is reported by the base station apparatus, and therefore each communication terminal apparatus can obtain access information by performing despreading processing using only the spreading code corresponding to the group to which that communication terminal apparatus itself belongs.

Thus, according to a communication terminal apparatus of this embodiment, even when a plurality of spreading codes are assigned to a user's traffic channel, a small number of spreading codes are assigned to an access channel including an uplink control channel, so that, even when a traffic channel is large-volume, control information such as access information does not increase, and it is possible to prevent a control channel that transmits control information from becoming large-volume.

Therefore, in a multicode communication method, transmission is carried out with spreading modulation processing performed on a large-volume traffic channel using a plurality of spreading codes, and spreading modulation processing performed on an access channel using a smaller number of spreading codes than for a traffic channel. Consequently, in access channel reception, it is possible not to perform despreading processing using a large number of spreading codes, but to perform despreading processing using a small number of spreading codes used for an access channel.

As a result, the amount of despreading processing can be reduced for an access channel. Also, since spreading codes are used efficiently, it is possible to make efficient use of code resources.

Moreover, in this embodiment, a similar effect to that described above can still be obtained if spreading codes with a small spreading factor are assigned to a traffic channel and spreading codes with a spreading factor larger than that of the aforementioned plurality of spreading codes are assigned to a control channel.

Furthermore, in a digital radio communication system that uses both a multicarrier communication method and a multicode communication method, greater radio resources determined by a combination of number of subcarriers, number of spreading codes, and spreading factor, are assigned to a traffic channel, and fewer radio resources than the plurality of spreading codes are assigned to a control channel.

Consequently, with regard to a multicarrier communication method, a small number of carriers are assigned to a control channel used for control or short message communication with a small amount of information, and it is not necessary to transmit the same wide band as for a traffic channel, enabling spectral efficiency to be improved; and with regard to a multicode communication method, even when a traffic channel is large-volume, control information such as access information does not increase, and it is possible to prevent a common control channel that transmits control information from becoming large-volume, and moreover efficient channel assignment that takes overall radio resources into consideration is possible, enabling spectral efficiency to be improved.

These embodiments are not limited to the OFDM method but can also be applied to other multicarrier communication methods, and similar effects can still be obtained if these embodiments are applied to another multicarrier communication method.

In above Embodiments 1 through 3, a case has been described where a control channel is an access channel, but these embodiments can also be applied to a case where a control channel is another uplink control channel.

As is clear from the above descriptions, according to the present invention, in a multicarrier communication system, spectral efficiency can be improved by assigning a small number of subcarriers to a control channel such as an access channel, in contrast to a large-volume traffic channel for which a plurality of subcarriers are assigned to a user.

Also, with a communication terminal apparatus of the present invention, since a control channel is received at low speed and in a narrow band, the sampling rate in signal processing such as A/D conversion can be kept low, enabling the amount of signal processing to be reduced and power saving to be achieved.

Moreover, according to a communication terminal apparatus of the present invention, in a multicode communication system, efficient use can be made of code resources by assigning a small number of spreading codes to a control channel such as an access channel, in contrast to a large-volume traffic channel for which a plurality of spreading codes are assigned to a user.

Furthermore, according to a communication terminal apparatus of the present invention, since a spreading code is assigned to each group of communication terminal apparatuses (users), it is sufficient to perform despreading processing using only the spreading code assigned to the group to which a communication terminal apparatus belongs, and it is not necessary to perform despreading processing using a spreading code assigned to another user group, with the result that the amount of processing is reduced.

This application is based on Japanese Patent Application No. 2000-092364 filed on March 29, 2000, entire content of which is expressly incorporated by reference herein.

## Claims

1. A communication terminal apparatus comprising:
assigning means for assigning a plurality of subcarriers to a traffic channel and assigning a smaller number of subcarriers than said plurality of subcarriers to a control channel; and
transmitting means for transmitting to a base station apparatus a multicarrier signal including subcarriers assigned by said assigning means.

2. The communication terminal apparatus according to claim 1, wherein said assigning means assigns said control channel to a subcarrier corresponding to a group in which said base station is grouped.

3. A communication terminal apparatus comprising:
assigning means for assigning a plurality of spreading codes to a traffic channel and assigning a smaller number of spreading codes than said plurality of spreading codes to a control channel; and
transmitting means for transmitting to a base station apparatus a multicode signal that has undergone spreading modulation processing using a spreading code assigned by said assigning means.

4. The communication terminal apparatus according to claim 3, wherein said assigning means assigns to said control channel a spreading code corresponding to a group in which said base station is grouped.

5. A communication terminal apparatus comprising:
assigning means for assigning a spreading code with a small spreading factor to a traffic channel and assigning a spreading code with a larger spreading factor than said plurality of spreading codes to a control channel; and
transmitting means for transmitting to a base station apparatus a signal that has undergone spreading modulation processing using a spreading code assigned by said assigning means.

6. A communication terminal apparatus comprising:
assigning means for assigning greater radio resources determined by a combination of number of subcarriers, number of spreading codes, and spreading factor, to a traffic channel, and assigning fewer radio resources than said plurality of spreading codes to a control channel; and
transmitting means for transmitting to a base station apparatus a signal that has undergone modulation processing using radio resources assigned by said assigning means.

7. A base station apparatus **characterized by** performing radio communication with a communication terminal apparatus, said communication terminal apparatus comprising:
assigning means for assigning a plurality of subcarriers to a traffic channel and assigning a smaller number of subcarriers than said plurality of subcarriers to a control channel; and
transmitting means for transmitting to a base station apparatus a multicarrier signal including subcarriers assigned by said assigning means.

8. A radio communication method comprising:
an assigning step of assigning a plurality of subcarriers to a traffic channel and assigning a smaller number of subcarriers than said plurality of subcarriers to a control channel;
a transmitting step of transmitting to a base station apparatus a multicarrier signal including subcarriers assigned in said assigning step; and
a receiving step of receiving a control channel signal assigned to a subcarrier corresponding to the group to which a station itself belongs, included in said multicarrier signal.

9. A radio communication method comprising:
an assigning step of assigning a plurality of spreading codes to a traffic channel and assigning a smaller number of spreading codes than said plurality of spreading codes to a control channel;
a transmitting step of transmitting to a base station apparatus a multicode signal that has undergone spreading modulation processing using a spreading code assigned in said assigning step; and
a receiving step of receiving a control channel signal that has undergone spreading modulation processing using a spreading code corresponding to the group to which a station itself belongs, included in said multicode signal.
